# EUROPEAN PATENT APPLICATION

(11) **EP 4 535 511 A1**
(43) Date of publication of application: **09.04.2025**
(21) Application number: 24827785.7
(22) Date of filing: 25.06.2024
(51) Int. Cl.: H01M 10/613

(54) **LIQUID COOLING PLATE, LIQUID COOLING SYSTEM AND BATTERY MODULE**

(30) Priority: 30.06.2023 CN 202321712215 U; 30.06.2023 CN 202321712225 U; 30.06.2023 CN 202310800797
(71) Applicant: Eve Energy Co., Ltd., Huizhou, Guangdong 516006 (CN)
(72) Inventor: ZHAO, Yuhang, Huizhou, Guangdong 516006 (CN); YAN, Shiwei, Huizhou, Guangdong 516006 (CN); WANG, Yuanyuan, Huizhou, Guangdong 516006 (CN); LAI, Libing, Huizhou, Guangdong 516006 (CN)
(74) Representative: Berggren Oy
(86) International application number: PCT/CN2024/101463
(87) International publication number: WO 2025/002141

(57) **Abstract**

A liquid cooling plate, comprising a liquid cooling plate body and a flow disturbance member; the liquid cooling plate body extends along a first direction, and a side surface of the liquid cooling plate body is a curved surface or a flat surface, wherein the side surface of the liquid cooling plate body conforms with a side wall of a cell; a plurality of flow channels extending along the first direction are provided inside the liquid cooling plate body, and the flow disturbance member is provided in each of the plurality of flow channels; the flow disturbance member has a single helical structure and extends along the first direction. The liquid cooling plate provided in the present application can improve the heat exchange efficiency of the liquid cooling plate.

## Description

This application claims priority to Chinese Patent Application No. 202310800797.2 filed on June 30, 2023, Chinese Patent Application No. 20231712215.7 filed on June 30, 2023, and Chinese Patent Application No. 20231712225.0 filed on June 30, 2023, the entire disclosures of which are incorporated herein by reference.

### TECHNICAL FIELD

The present application relates to the field of battery technologies, and in particular, to a liquid cooling plate, a liquid cooling system, and a battery module.

### BACKGROUND

The snake-shaped liquid cooling plate is in contact with the side surface of the cell for heat exchange, has the advantages of high heat dissipation efficiency, large heat exchange area, small pressure drop, good thermal insulation effect and high structural strength, and becomes the mainstream of the liquid cooling plate for a power battery. Currently, a flow channel in a serpentine liquid cooling plate is mostly formed by a plurality of square regular cavities. A cooling liquid is distributed into the plurality of cavities by a water inlet collector, flows in the flow channel and forms convection heat exchange with a cell, and finally converges into the water outlet collector and flows out from a liquid outlet.

### TECHNICAL PROBLEM

Since the flow rate of the cooling liquid at the liquid inlet is relatively large, it is difficult to form a turbulent flow in the flow channel. In the meanwhile the heat exchange area in the cavity is limited, so that the heat conduction area inside the serpentine liquid cooling plate is relatively small, resulting in low heat exchange efficiency of the liquid cooling plate.

### SUMMARY

The present application provides a liquid cooling plate, including a liquid cooling plate body and a flow disturbance member, wherein the liquid cooling plate body extends along a first direction, a side surface of the liquid cooling plate body is a curved surface or a flat surface, the side surface of the liquid cooling plate body conforms with a side wall of a cell, a plurality of flow channels extending along a first direction are provided inside the liquid cooling plate body, and the flow disturbance member is provided in the flow channels.

The flow disturbance member has a single helical structure and extends along the first direction.

The present application further provides a liquid cooling system, including a liquid collector and a liquid cooling plate as described above, wherein a flow channel is provided inside the liquid cooling plate, and the flow channel has a liquid inlet end and a liquid outlet end; the collector includes a liquid inlet collector and a liquid outlet collector, the liquid inlet collector is communicated with the liquid inlet end, and the liquid outlet collector is communicated with the liquid outlet end.

The liquid cooling plate extends in a first direction, the liquid cooling plate includes two opposite ends in the first direction, and the liquid inlet end, the liquid outlet end, the liquid inlet collector, and the liquid outlet collector are located at a same end of the liquid cooling plate.

The present application further provides a battery module, including the liquid cooling system above.

### BENEFICIAL EFFECT

The present application provides a liquid cooling plate. By arranging a flow disturbance member in a flow channel of the liquid cooling plate, since the flow disturbance member is a single helical structure, and a helical extension direction of the single helical structure is the same as an extension direction of the flow channel, a relatively strong turbulent flow is formed by the single helical structure after cooling liquid enters the flow channel, thereby increasing the heat exchange efficiency of a liquid cooling pipe.

The present application further provides a liquid cooling system. A liquid inlet end, a liquid outlet end, a liquid inlet collector, and a liquid outlet collector of the liquid cooling plate are disposed at the same end of the liquid cooling plate, so that on one hand, it is convenient for the concentration and rapid connection of the liquid inlet end and the liquid inlet collector, as well as that of the liquid outlet end and the liquid outlet collector.

The present application further provides a battery module. The collector and the connection pipelines are disposed on the same side of the liquid cooling plate, so that space occupied by the liquid-cooling system in the battery module is saved.

### BRIEF DESCRIPTION OF THE DRAWINGS

Fig. 1 is a schematic structural diagram of a liquid cooling plate according to embodiments of the present application;
Fig. 2 is a schematic structural diagram of a liquid cooling plate cooperating with a cell according to embodiments of the present application;
Fig. 3 is a partial schematic structural diagram of a liquid cooling plate according to embodiments of the present application;
Fig. 4 is a schematic enlarged view of a position A of a liquid cooling plate according to the embodiment shown in Fig. 3;
Fig. 5 is a schematic structural diagram of a flow disturbance member of a liquid cooling cold plate according to embodiments of the present application.
Fig. 6 is a schematic structural diagram of a liquid cooling system according to embodiments of the present application;
Fig. 7 is a schematic structural diagram of a liquid cooling plate of a liquid cooling system according to embodiments of the present application;
Fig. 8 is a schematic diagram of a current collecting structure of a liquid cooling system according to embodiments of the present application;
Fig. 9 is a schematic structural diagram of a battery module according to embodiments of the present application;

### EMBODIMENTS OF THE PRESENT APPLICATION

In the description of the present application, unless specified or limited otherwise, the terms "connected", "connected", and "fixed" should be understood broadly, for example, fixed connections, detachable connections, or integral connections; and can also be mechanical or electrical connections; can also be direct connections or indirect connections via intervening structures; can also be inner communications of two elements or interaction relationships between two elements. The specific meanings of the above terms in the present application can be understood by those skilled in the art according to specific situations.

In the present application, unless specified or limited otherwise, a structure in which a first feature is "above" or "under" a second feature may include an embodiment in which the first feature is in direct contact with the second feature, and can also include an embodiment in which the first feature and the second feature are not in direct contact with each other, but are contacted via another feature formed therebetween. Furthermore, a first feature "on", "above" or "on top of" a second feature includes an embodiment in which the first feature is right or obliquely "on", "above" or "on top of" the second feature, and the first feature is at a height greater than that of the second feature. The first feature "below", "under", and "on the bottom of" the second feature includes the first feature "directly below" and "diagonally below" the second feature, and the first feature is horizontally less than the second feature.

In the description of this embodiment, orientation or position relationships of terms such as 'up', 'down', 'left', 'right', 'front', and 'rear' are based on orientation or position relationships shown in the drawings, which are used for ease of description and simplifying operations, but do not indicate or imply that a device or element referred to must have a specific orientation, or be constructed and operated in a specific orientation, and therefore cannot be construed as limitations to this application. In addition, the terms "first" and "second" are used for distinguishing in terms of description, and do not have a special meaning.

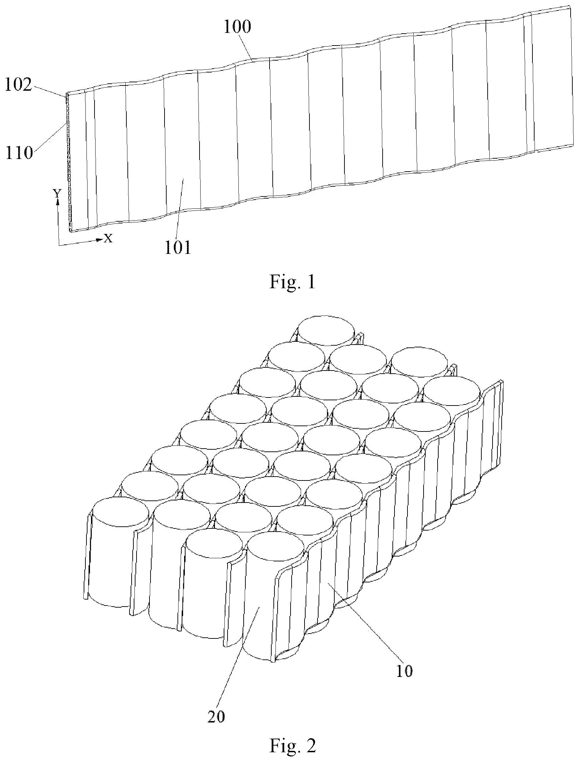

Referring to Fig. 1 to Fig. 5, embodiments of the present application provide a liquid cooling plate 10, where the liquid cooling plate 10 includes a liquid cooling plate body 100 and a flow disturbance member 200. The liquid cooling plate body 100 extends along a first direction, a side face 101 of the liquid cooling plate body 100 is a curved face or a flat face, and the side face of the liquid cooling plate body 100 conforms with a side wall of a cell 20. A plurality of flow channels 110 extending along a first direction are provided inside the liquid cooling plate body 100, and the flow disturbance member 200 is provided in the flow channel 110. The flow disturbance member 200 has a single helical structure and extends in the first direction.

As shown in Fig. 1 to Fig. 2, the liquid cooling plate 10 is a plate-shaped structure having a certain thickness and disposed between the cells 20, and contacts a side wall of the cell 20, so as to cool the cell 20.

As shown in Fig. 1, the liquid cooling plate 10 includes a liquid cooling plate body 100. The liquid cooling plate body 100 extends along a first direction (i.e. an X direction in the figure). The liquid cooling plate body includes two opposite side surfaces 101, and the shape of the side surfaces 101 matches the shape of the side wall of the cell 20, so as to increase the contact area between the liquid cooling plate 10 and the cell 20, thereby increasing the heat exchange efficiency therebetween.

In a case where the cell 20 is a cylindrical cell, the side surface 101 is a curved surface, and the liquid cooling plate 10 is a curved surface liquid cooling plate. As shown in Fig. 2, the side surface 101 of the liquid cooling plate body 100 is a wavy concave-convex curved surface extending along a first direction, the concave-convex curved surface includes a concave portion and a convex portion, and the curvature of the concave portion and the convex portion matches the diameter of the cell 20. In a case where the liquid cooling plate 10 is arranged between the cells 20, the concave portion near the side surface 101 of one side of the cell 20 is attached to the side wall of the cylindrical cell and the protruding portion is located between adjacent cells 20, which increase the contact area between the side surface 101 of the liquid cooling plate body and the side wall of the cell 20. The increase of the contact area facilitates heat conduction of the cell 20, so that a heat conduction rate thereof is greater and the temperature equalization performance is better, thereby improving heat exchange efficiency of the liquid cooling plate 10.

In a case where the cell 20 is a square cell or a soft pack cell, the side surface 101 is a plane, and the liquid cooling plate 10 is a planar liquid cooling plate. In a case where the liquid cooling plate 10 is disposed between the cells 20, the planar side surface 101 is attached to the side wall of the planar cell, so as to perform heat exchange, thereby cooling the cells 20.

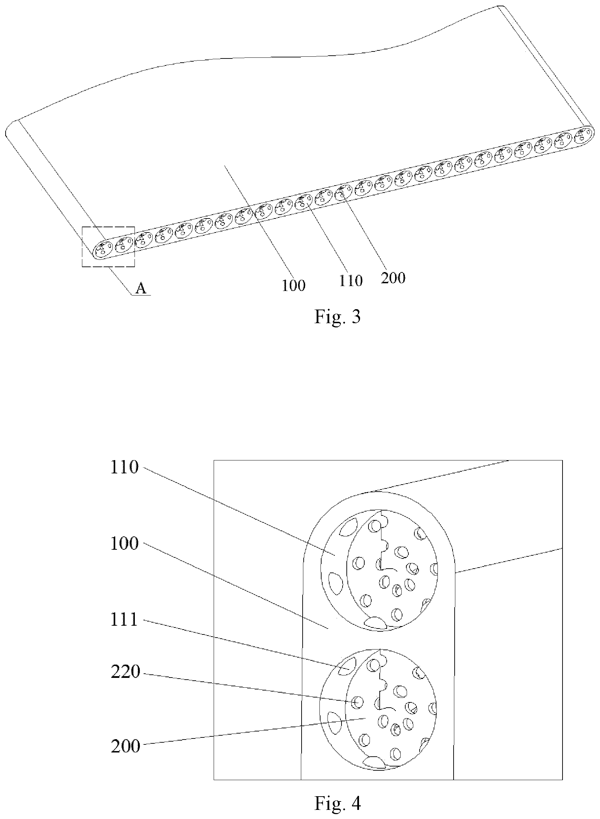

As shown in Fig. 3, the flow channel 110 is a hollow channel arranged inside the liquid cooling plate 10, the channel extends in a first direction (i.e. an X direction in the figure). The flow channel 110 includes a liquid inlet opening and a liquid outlet opening, the cooling liquid enters the flow channel from the liquid inlet opening, and is output from the liquid outlet opening to the liquid cooling plate 10. The cooling liquid flowing through the flow channel 110 exchanges heat with the cell 20, so as to cool the cell 20.

In some embodiments, a shape of the flow channel 110 is consistent with a shape of a side surface of the liquid cold plate body 100. In a case where the side surface 101 of the liquid cold plate body 100 is a curved surface, the flow channel 110 is arranged in a curve shape along a first direction, and the curve-type flow channel helps enhance a flow disturbance effect of the cooling liquid in the flow channel, so as to improve liquid cooling efficiency of the liquid cold plate 10. In a case where the side surface 101 of the liquid cooling plate body 100 is a flat surface, the flow channel 110 is arranged in a straight line shape along the first direction.

As shown in Fig. 3 to Fig. 4, the flow disturbance member 200 has a long strip shape and a single helical structure, and the extending direction of the flow disturbance member 200 is consistent with the extending direction of the flow channel 110. The flow disturbance member 200 is disposed between the inner wall of the flow channel 110 and the inner wall of the flow channel 110 to form a single helical channel, and the cooling liquid flows in the single helical channel. Since the cooling liquid used by the battery liquid cooling plate 10 is generally a liquid with a low viscosity, such as water, compared with a double helical channel structure, the single helical channel used in the present application is more suitable for transporting the cooling liquid of the battery, and the single helical channel has a simple structure and a lower manufacturing cost.The cooling liquid flows in the single helical channel faster, has a higher heat exchange efficiency, and is not easily blocked.

In some embodiments, a shape of the flow disturbance member 200 is consistent with a shape of the flow channel 110. In a case where the side surface 101 of the liquid cooling plate body 100 is a curved surface, the flow disturbance member 200 is arranged in a curved shape along the first direction, so that on one hand, the fitting degree with the shape of the flow channel is improved, and on the other hand, the flow disturbance member effect is enhanced, and the liquid cooling efficiency of the liquid cooling plate 10 is improved. In a case where the side surface 101 of the liquid cooling plate body 100 is a flat surface, the flow disturbance member 200 is arranged linearly along the first direction.

In the present application, a flow disturbance member with a single helical structure is additionally provided in the flow channel of the liquid cooling plate 10, so as to enhance the flow disturbance effect on the cooling liquid flowing through the flow channel, increase the contact area between the cooling liquid and the flow disturbance member, and enhance the heat exchange efficiency of the cooling liquid.

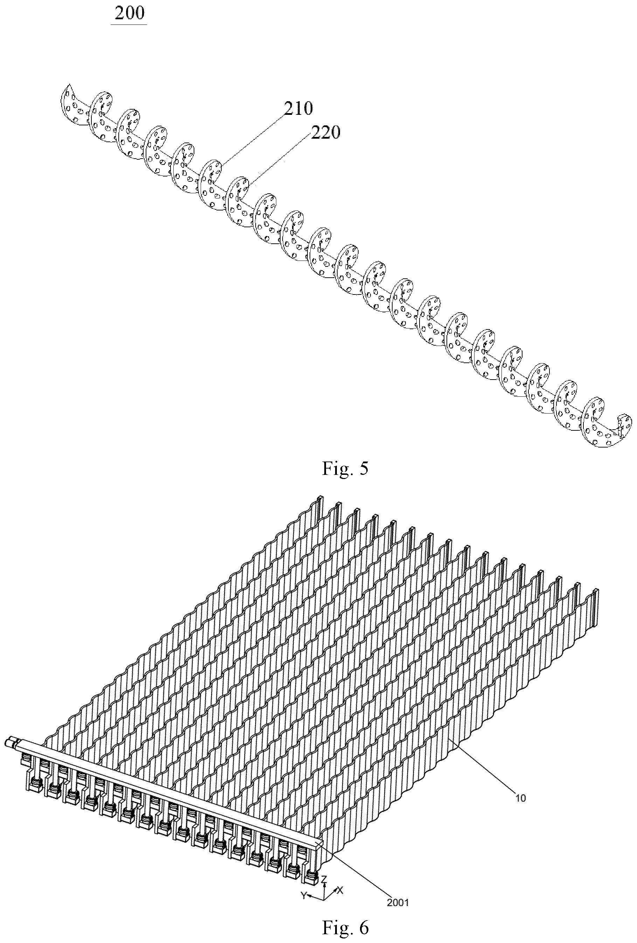

In some embodiments, as shown in Fig. 5, the flow disturbance member 200 includes a helical blade 210, the helical blade 210 is provided with through holes 220, and the through holes 220 penetrate through the helical blade 210 in a first direction.

As shown in Fig. 5, the flow disturbance member 200 is formed by helical blades, and the flow disturbance member 200 is configured as a blade-type helical structure, so that the contact area between the cooling liquid and the blade surface is increased, thereby enhancing the flow disturbance member effect and the heat exchange efficiency.

However, after the flow disturbance member 200 is added to the flow channel 110, the flow resistance to the cooling liquid is correspondingly increased, and the pressure of the whole liquid cooling system is increased. In order to ensure that the pressure drop of the whole liquid cooling system meets the requirements, in the present application, a through hole 220 is provided on the helical blade 210 of the flow disturbance member 200, the through hole 220 penetrates through the helical blades 210, and a part of the cooling liquid flows through the through hole 220, which can effectively reduce the flow resistance of the cooling liquid in the flow channel 110. In addition, the through holes 220 can also enhance the effect of turbulence and improve the heat exchange efficiency.

In some embodiments, the flow disturbance member 200 is provided with a plurality of through holes 220, and the plurality of through holes 220 are evenly distributed on the helical blades 210 to ensure the uniformity of heat exchange.

In some embodiments, the cross-section of the through-hole 220 is a regular shape such as a circle or a square, and can also be an irregular shape, which is not limited herein.

In some embodiments, intervals between adjacent helical blades 210 of the flow disturbance member 200 can be set to be equal, so as to facilitate manufacturing of the flow disturbance member 200, simplify a manufacturing process of the flow disturbance member 200, and increase universality of the flow disturbance member 200.

After the cooling liquid flows into the flow channel 110 from the liquid inlet opening, the cooling liquid exchanges heat with the cell 20 to increase the temperature of the cooling liquid. Therefore, in the flow channel 110, the temperature of the cooling liquid near the liquid inlet opening is higher along the flow direction of the cooling liquid, so that the heat exchange capacity of the front section (the part close to the liquid inlet opening) and the heat exchange capacity of the rear section (the part close to the liquid outlet opening) of the liquid cooling plate 10 are inconsistent. As a result, the liquid cooling plate 10 has non-uniform heat exchange. Therefore, the present application ensures uniform heat exchange through the distance between the helical blades 210 of the flow disturbance member 200.

In some embodiments, the distances between adjacent helical blades 210 near the liquid inlet opening is greater than the distance between adjacent helical blades 210 near the liquid outlet opening. Specifically, by taking the center point of the flow disturbance member 200 in the first direction as a boundary, the distances between any adjacent helical blades 210 from the end of the flow disturbance member 200 close to the liquid inlet opening to the center point are set to be equal to "a", and the distances between any adjacent helical blades 210 from the center point to the end of the flow disturbance member 200 close to the liquid outlet opening are set to be equal to "b", where "a" is less than "b". By making the helical density of the rear half section (from the central point to the end of the flow disturbance member 200 close to the liquid inlet opening) of the flow disturbance member 200 greater than the helical density of the front half section (from the end of the flow disturbance member 200 close to the liquid inlet opening to the central point) of the flow disturbance member 200 to increase the contact area between the cooling liquid in the second half section and the helical blades 210, the heat exchange between the cooling liquid and the helical blades 210 is enhanced, so as to balance the heat exchange capacity of the front section and the rear section of the liquid cooling plate 10, thereby making the cooling liquid flowing through the liquid cooling plate 10 can have evenly exchange heat with the cell 20.

In some embodiments, in a direction from the liquid inlet opening to the liquid outlet opening, that is, in the direction in which the cooling liquid flows, the distances between adjacent helical blades 210 of the flow disturbance member 200 decrease sequentially. In a case where the temperature of the cooling liquid flowing through the flow channel 110 gradually increases along with the heat exchange with the cell 20, by means of arranging the distances between adjacent helical blades 210 of the flow disturbance member 200 to be successively reduced, the heat exchange capacity of the liquid cooling plate 10 is effectively balanced, and the uniformity of heat exchange is ensured.

In some embodiments, as shown in Fig. 4, a side surface of the flow channel 110 facing the flow disturbance member 200 is provided with a convex structure 111.

Specifically, the protruding structure 111 is a semicircular protrusion structure or a rectangular protrusion structure, which is not limited herein. A plurality of protruding structures 111 are distributed at intervals and evenly on an inner wall of the flow channel 110. By providing the protruding structures 111 in the flow channel 110, a turbulent effect of cooling liquid flowing through the flow channel 110 is promoted, thereby improving heat exchange efficiency of the liquid cooling plate 10.

In some embodiments, as shown in Fig. 3 to Fig. 4, the cross section of the flow channel 110 is circular. The inner flow channel 110 of the liquid cooling plate 10 is formed by a plurality of circular channels. On one hand, the circular channels can enhance the overall structural strength of the liquid cooling plate 10, and can ensure the uniform heat exchange of the cell 20. On the other hand, the circular channel can better match the flow disturbance member 200 with a helical structure, and the edge of the helical blade 210 of the flow disturbance member 200 is more easily attached to the inner wall of the circular channel, so that a helical channel is formed in the flow channel 110, which helps improve the heat exchange efficiency of the liquid cooling plate 10.

In some embodiments, as shown in Fig. 1, a plurality of flow channels 110 penetrate the liquid cooling plate body 100, and the plurality of flow channels 110 are arranged in parallel in a second direction perpendicular to the first direction.

Specifically, the plurality of flow channels 110 all extend in the first direction, the plurality of flow channels 110 all penetrate the liquid cooling plate body 100 in the first direction, and the plurality of flow channels 110 are arranged in parallel at intervals in the second direction (i.e. a Y direction in the figure), so as to form a parallel arrangement. In a first direction, the liquid cooling plate 10 includes a first end surface 102 and a second end surface 102 opposite to each other, as shown in Fig. 3. A plurality of liquid inlet openings are arranged along a second direction (i.e. a Y direction in the figure), and the plurality of liquid inlet openings are respectively in communication with corresponding flow channels 110. On the second end surface of the liquid cooling plate 10, a plurality of liquid outlet openings are arranged along a second direction (i.e. a direction Y in the figure), the liquid outlet openings communicate with the corresponding channels 110. In the process of cooling the cell 20 by the liquid cooling plate 10, the cooling liquid is distributed to the plurality of liquid inlet openings by the liquid inlet collector and is delivered to the corresponding flow channel 110. The cooling liquid flows in the flow channel 110 and forms convection heat exchange with the cell 20, and finally flows out of the liquid outlet openings and is converged into the liquid outlet collector. In the present application, the plurality of flow channels 110 are arranged in parallel to cool a cell 20, so that the cooling effect is more uniform and the heat exchange efficiency is higher.

It should be noted that the flow channels 110 in the liquid cooling plate 10 can also be arranged in series, or arranged in combination of series connection and parallel connection, which is not limited herein.

The present application provides a liquid cooling plate. A flow disturbance member is disposed in a flow channel of the liquid cooling plate. The flow disturbance member is of a single helical structure, and a helical extension direction of the single helical structure is the same as an extension direction of the flow channel. After entering the flow channel, a cooling liquid forms a strong flow disturbance due to the single helical structure, thereby increasing the heat exchange efficiency of a liquid cooling pipe.

As shown in Fig. 6 to Fig. 8, which are schematic structural diagrams of a liquid cooling system provided in the present application. The liquid cooling system includes a liquid cooling plate 10 and a collector 2001.

A flow channel is provided inside the liquid cooling plate 10, and the flow channel includes a liquid inlet end and a liquid outlet end.

The collector 2001 includes a liquid inlet collector 2101 and a liquid outlet collector 2201, in which the liquid inlet collector 2101 is in communication with a liquid inlet end, and the liquid outlet collector 2201 is in communication with a liquid outlet end;

The liquid cooling plate 10 extends in a first direction, the liquid cooling plate 10 includes two opposite ends in the first direction, and a liquid inlet end, a liquid outlet end, a liquid inlet collector 2101 and a liquid outlet collector 2201 are located at the same end of the liquid cooling plate 10.

Specifically, the liquid cooling plate 10 is a plate-shaped structure having a certain thickness, and a channel, i.e. a flow channel, through which a cooling liquid circulates is provided inside the liquid cooling plate 10. The liquid cooling plate 10 is arranged on at least one side of the cell, and a side face of the liquid cooling plate 10 is in contact with a side wall of the cell. The cooling liquid flowing in the flow channel exchanges heat with the cell, so as to cool and cool the cell, thereby improving the service life of the cell.

The collector 2001 is used to provide cooling liquid for the liquid cooling plate 10. The liquid inlet collector 2101 is in communication with the liquid inlet end of the flow channel and is used to input the cooling liquid to the flow channel. The cooling liquid flows through the flow channel and exchanges heat with the cell, the temperature of the cooling liquid after heat exchange rises, and then is output through the liquid outlet end of the flow channel and collected in the liquid outlet collector 2201, so as to complete the cooling of the cell.

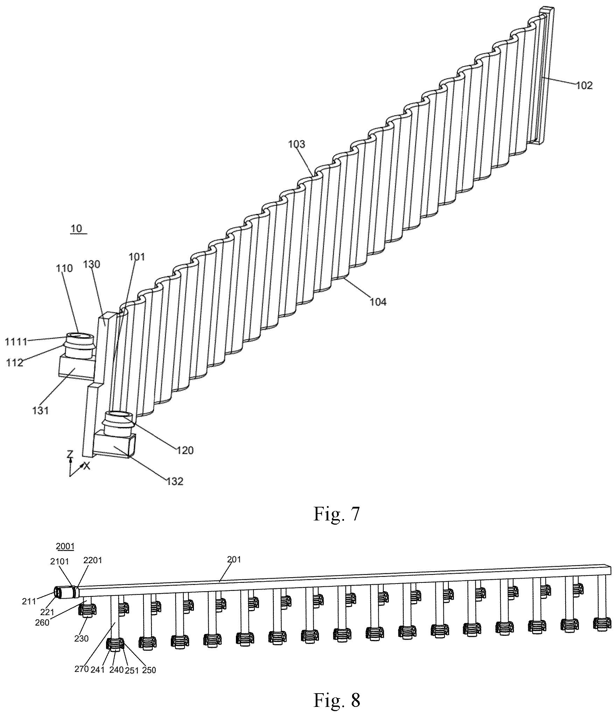

In some embodiments, as shown in Fig. 7, along a first direction (i.e. an X direction), the liquid cooling plate 10 includes a first end 101 and a second end 102 opposite to each other. Both a liquid inlet end and a liquid outlet end of the flow channel are located at the first end 101, the liquid inlet collector 2101 is located on a side close to the first end 101 and is in communication with the liquid inlet end, and the liquid outlet collector 2201 is located on a side close to the first end 101 and is in communication with the liquid outlet end.

In the present application, the liquid inlet end, the liquid outlet end, the liquid inlet collector 2101 and the liquid outlet collector 2201 of the liquid cooling plate 10 are arranged at the same end of the liquid cooling plate 10, so that on one hand, the liquid inlet end is integrated with the liquid inlet collector 2101, the liquid outlet end is integrated with the liquid outlet collector 2201 to facilitate quick connection, and on the other hand, the collector 2001 and the connecting pipeline are arranged at the same side of the liquid cooling plate 10, so that the space occupied by the liquid cooling system in the battery module is saved.

In some embodiments, as shown in Fig. 6 to Fig. 8, in order to facilitate the connection between the liquid inlet end and the liquid inlet collector 2101 and the connection between the liquid outlet end and the liquid outlet collector 2201, a liquid inlet opening 110 is provided at a liquid inlet end, a liquid outlet opening 120 is provided at a liquid outlet end, a liquid inlet connector 230 is provided on a liquid inlet collector 2101, and a liquid outlet connector 240 is provided on the liquid outflow collector 2201. The liquid inlet opening 110 is connected to the liquid inlet connector 230, and the liquid outlet opening 120 is connected to the liquid outlet connector 240 Thus, the liquid inlet end is communicated with the liquid inlet collector 2101, and the liquid outlet end is communicated with the liquid outlet collector 2201.

In some embodiments, the liquid inlet opening 110 is connected to the liquid inlet connector 230 in a plugged manner, and the liquid outlet opening 120 is connected to the liquid outlet connector 240 in a plugged manner, so as to facilitate quick connection between the collector 2001 and the liquid cooling plate 10.

For example, as shown in Fig. 7, the liquid inlet opening 110 and the liquid outlet opening 120 of the liquid cooling plate 10 are sockets, the sockets include a inserting hole 1111, and an outer periphery of the socket is provided with a convex lug 112. As shown in Fig. 3, the liquid inlet connector 230 and the liquid outlet connector 240 of the collector 2001 is a quick connector, and an outer diameter of the quick connector matches an inner diameter of the inserting hole 1111, so that in a case where the quick connector is inserted into the inserting hole 1111. The outer periphery of the quick plug connector is provided with a convex portion 241, and an inner wall of the inserting hole 1111 is provided with a concave portion matching the convex portion, so that during plugging, the socket is connected and fixed to the quick plug connector; The quick plug connector is further provided with a buckle 250. A side of the buckle 250 facing the quick plug connector is provided with a groove 251 matching the convex lug 112, so that during plugging, the convex lug 112 is embedded in the groove 251. The socket and the quick plug are locked, falling-off is avoided, and the reliability of the connection between the liquid cooling plate 10 and the collector 2001 is improved.

It should be noted that, connection structures of the liquid inlet opening 110 and the liquid inlet connector 230, and connection structures of the liquid outlet opening 120 and the liquid outlet connector 240 are not limited to the specific structures in the foregoing embodiments, and other forms of plug-in connection structures are also acceptable. The connection manner between the liquid inlet opening 110 and the liquid inlet connector 230, and the connection manner between the liquid outlet opening 120 and the liquid outlet connector 240 are not limited to the foregoing plug-in connection manners, and can also be other connection manners, which are not specifically limited herein.

In some embodiments, as shown in Fig. 6, the liquid inlet opening 110, the liquid outlet opening 120, the liquid inlet connector 230, and the liquid outlet connector 240 all extend along a second direction perpendicular to the first direction, the liquid inlet opening 110 is connected to the liquid inlet connector 230 along the second direction, and the liquid outlet opening 120 is connected to the liquid outlet connector 240 along the second direction, so as to facilitate quick connection between the liquid cooling plate 10 and the collector 2001, thereby effectively improving the assembling efficiency.

As shown in Fig. 6, the inserting holes 1111 of the liquid inlet opening 110 and the liquid outlet opening 120 have the same opening direction and face towards the second direction (i.e. Z direction). The collector 2001 extends along a third direction (i.e. a Y direction) perpendicular to both the first direction and the second direction, the liquid inlet connector 230 and the liquid outlet connector 240 are connected to the collector 2001 via a short pipe, and the short pipe is perpendicular to the collector 2001 (i.e. extending along the Z direction). In a case where the collector 2001 is connected to the liquid cooling plate 10, the liquid inlet connector 230 is inserted into the inserting hole 1111 of the liquid inlet opening 110 in the Z direction, and the liquid outlet connector 240 is inserted into the inserting hole 1111 of the liquid outlet opening 120 in the Z direction, so that the liquid inlet collector 2101 is communicated with the liquid inlet opening 110, and the liquid outlet collector 2201 is communicated with the liquid outlet opening 120, which can effectively improve the connection efficiency.

In some embodiments, as shown in Fig. 7, the liquid cooling plate 10 further includes a connecting member 130, the connecting member 130 is connected to one end of the liquid cooling plate 10, and the liquid inlet opening 110 and the liquid outlet opening 120 are disposed on two opposite sides of the connecting member 130. A plurality of channels are provided in the connection member 130, and the plurality of channels are configured to communicate the liquid inlet opening 110 and the flow channel, and communicate the liquid outlet opening 120 and the flow channel.

As shown in Fig. 7, the connecting member 130 extends along the first direction, and in the third direction, the connecting member 130 includes two opposite sides, the two sides of the connecting member 130 are respectively provided with a first extension portion 131 and a second extension portion 132 which are perpendicular to the connecting member 130, the liquid inlet opening 110 is provided on the first extension portion 131, and the liquid outlet opening 120 is provided on the second extension portion 132, so that the opening direction of the inserting holes 1111 of the liquid inlet opening 110 and the liquid outlet opening 120 faces towards the second direction, it is convenient for the liquid inlet opening 110 and the liquid outlet opening 120 to dock with the collector 2001 in the second direction. A channel is provided inside the connection member 130, the liquid inlet opening 110 is in communication with the first extension portion 131, and the first extension portion 131 is in communication with the liquid inlet end of the flow channel via the channel. The liquid outlet opening 120 is in communication with the second extension portion 132, and the second extension portion 132 is in communication with the liquid outlet end of the flow channel via the channel.

An opening direction of the inserting holes 1111 of the liquid inlet opening 110 and the liquid outlet opening 120 is adjusted by means of the connecting member 130, so that the opening directions of the inserting holes 1111 all face towards a second direction, so that the liquid inlet opening 110 and the liquid outlet opening 120 are connected in the second direction. Meanwhile, the liquid inlet opening 110 and the liquid outlet opening 120 are arranged at two opposite sides of the connecting member 130, thereby avoiding interference between the liquid inlet connector 230 and a connecting pipeline thereof, and the liquid outlet connector 240 and the connecting pipeline thereof during connection, and affecting the connection reliability.

In some embodiments, the liquid inlet collector 2101 and the liquid outlet collector 2201 are integrally formed, so as to improve the integration of the collector 2001, simplify the process, and save the space occupied by the collector 2001.

As shown in Fig. 8, the collector 2001 includes a collector body 201, the collector body 201 extends in a third direction, a liquid inlet collector channel and a liquid outlet collector channel extending in the third direction are disposed inside the collector body 201, a cooling liquid inlet 211 is disposed at one end of the liquid inlet collector channel, and a cooling liquid outlet 221 is disposed at one end of the liquid outlet collector channel. **In** the second direction, the collector body 201 includes two opposite sides, and one side of the collector body 201 is connected to the liquid inlet connector 230 and the liquid outlet connector 240, the liquid inlet connector 230 is in communication with the liquid inlet collector channel, and the liquid outlet connector 240 is in communication with the liquid outlet collector channel. The liquid inlet connector 230 is connected to the collector body 201 by means of a first short pipe 260, the liquid outlet connector 240 is connected to the collector body 201 by means of a second short pipe 270, and the lengths of the first short pipe 260 and the second short pipe 270 are different, so as to avoid interference between the liquid inlet connector 230 and the liquid outlet connector 240 during installation, which affect the reliability of the connection between the main collecting body 2001 and the liquid cooling plate 10. The collector body 201, the first short pipe 260 and the second short pipe 270 can also be integrally formed.

In some embodiments, as shown in Fig. 6, the liquid cooling system includes a plurality of liquid cooling plates 10. The plurality of liquid cooling plates 10 are arranged in parallel, and communicate with one collector 2001 to form a parallel structure.

As shown in Fig. 5, the liquid cooling system includes a plurality of liquid cooling plates 10. The plurality of liquid cooling plates 10 are arranged in parallel in a third direction, and the plurality of liquid cooling plates 10 are arranged in parallel. A liquid inlet opening 110 and a liquid outlet opening 120 of the liquid cooling plate 10 are both located at a first end 101 of the liquid cooling plate 10. The collector 2001 is disposed close to the first end 101 of the liquid cooling plate 10, multiple combinations of liquid inlet connectors 230 and liquid outlet connectors 240 are arranged side by side on the collector body 201 along a third direction, and one liquid inlet connector 230 and one liquid outlet connector 240 are correspondingly connected to one liquid cooling plate 10. In the present application, a liquid-cooling system is connected in parallel using a plurality of liquid cooling plates, which can effectively reduce the flow resistance of the entire liquid-cooling system and improve the flow uniformity of the liquid-cooling system.

In some embodiments, as shown in Fig. 6 to Fig. 7, in the second direction, the liquid cooling plate 10 includes a top end 103 and a bottom end 104 opposite to each other, and the collector 2001 overlaps the top end 103 or the bottom end 104. As shown in Fig. 6, a part of the collector body 201 can be overlapped at the edge of the top end 103 of the liquid cooling plate 10 located at the first end 101, so that installation space in the second direction is reasonably utilized, thereby reducing space occupied by the liquid cooling system in the first direction, reducing space occupation ratio of the liquid cooling system in the battery module or the battery pack, and reducing costs of the liquid cooling system at the same time.

In some embodiments, the flow channel is U-shaped, one end of the U-shaped flow channel is a liquid inlet end, and the other end of the U-shaped flow channel is a liquid outlet end.

Specifically, in the liquid cooling plate 10, a plurality of parallel flow channels are included along a first direction, and the flow channel include a liquid inlet channel and a liquid outlet channel, the liquid inlet end of the liquid inlet channel and the liquid outlet end of the liquid outlet channel are both located at the first end 101 of the liquid cooling plate 10, and are located at the second end 102 of the liquid cooling plate 10, the liquid inlet channel is in communication with the liquid outlet channel to form a U-shaped flow channel, and the cooling liquid enters the U-shaped flow channel from the liquid inlet end of the first end 101 of the liquid cooling plate 10, the liquid crystal panel 10 is output from the liquid outlet end of the first end 101 after heat exchange with the cells. The flow channels in the liquid cooling plate 10 are configured to be U-shaped flow channels, so that the liquid cooling plate 10 has better temperature uniformity and a better liquid cooling effect.

In some embodiments, the liquid cooling plate 10 is contoured in a wavy shape in a first direction.

As shown in Fig. 5, along the third direction, the liquid cooling plate 10 includes two opposite side faces, and the two side faces of the liquid cooling plate 10 are configured as wavy concave-convex curved surfaces, By arranging the side surface of the liquid cooling plate 10 to be a wavy concave-convex curved surface, the concave portion of the liquid cooling plate 10 conforms the side wall of the cell of the cylindrical battery module, a convex portion of the liquid cooling plate 10 is located between adjacent cells, which can increase the contact area between the side surface of the liquid cooling plate 10 and the side wall of the cell, the increase of the contact area facilitates heat conduction of the cell, has a fast heat conduction rate and good temperature equalization performance, and facilitates improvement of heat exchange efficiency of the liquid cooling plate 10.

The present application further provides a battery module, including the liquid cooling system above.

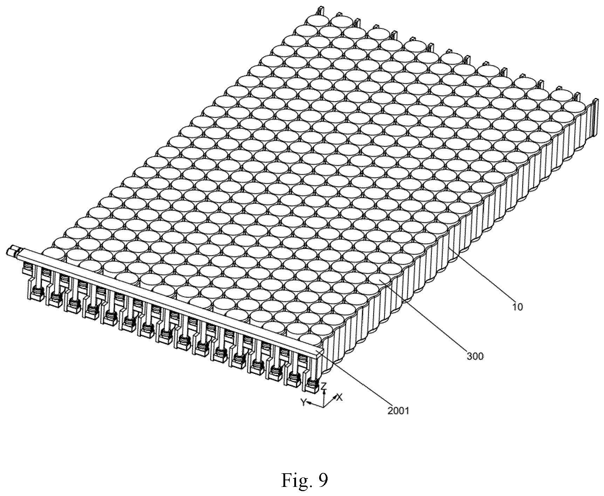

As shown in Fig. 9, the battery module includes a cell group and a liquid cooling system.

The cell group includes a plurality of cells 300, and the plurality of cells 300 are arranged in an array, wherein the cells 300 are cylindrical cells 300 or square cells 300, but are not limited thereto.

The liquid cooling system includes a liquid cooling plate 10 and a collector 2001, a flow channel is provided inside the liquid cooling plate 10, and the flow channel includes a liquid inlet end and a liquid outlet end. The collector 2001 includes a liquid inlet collector 2101 and a liquid outlet collector 2201, the liquid inlet collector 2101 is in communication with a liquid inlet end, and the liquid outlet collector 2201 is in communication with a liquid outlet end. The liquid cooling plate 10 extends in a first direction, the liquid cooling plate 10 includes two opposite ends in the first direction, and a liquid inlet end, a liquid outlet end, a liquid inlet collector 2101 and a liquid outlet collector 2201 are located at the same end of the liquid cooling plate 10.

The liquid cooling plate 10 is located between two adjacent rows or two adjacent columns of cells 300, and a side surface of the liquid cooling plate 10 is in contact with a side wall of the cell 300, the cooling liquid is distributed by a liquid inlet collector 2101 and is delivered into a plurality of flow channels from a liquid inlet end, and the cooling liquid flows in the flow channels and forms convection heat exchange with the cell 300, then, the liquid cooling plate 10 is output from the liquid outlet end, and finally collected in the liquid outlet collector 2201, so that the liquid cooling system cools the cells 300.

In some embodiments, the battery module further includes a housing. The housing has an accommodating cavity. The cell group, the liquid cooling system, the liquid inlet collector and the liquid outlet collector are all accommodated in the accommodating cavity.

The present application provides a liquid cooling system and a battery module. A liquid inlet end, a liquid outlet end, a liquid inlet collector, and a liquid outlet collector of a liquid cooling plate are disposed at the same end of the liquid cooling plate, on the one hand, the liquid inlet end is convenient to be connected to the liquid inlet collector, and the liquid outlet end is convenient to be connected to the liquid outlet collector in a concentrated and rapid manner, on the other hand, the collector and the connection pipeline are disposed on the same side of the liquid cooling plate, so that space occupied by the liquid-cooling system in the battery module is saved.

## Claims

1. A liquid cooling plate, comprising a liquid cooling plate body and a flow disturbance member;
the liquid cooling plate body extends along a first direction, and a side surface of the liquid cooling plate body is a curved surface or a flat surface, wherein the side surface of the liquid cooling plate body conforms with a side wall of a cell;
a plurality of flow channels extending along the first direction are provided inside the liquid cooling plate body, and the flow disturbance member is provided in each of the plurality of flow channels;
wherein the flow disturbance member has a single helical structure and extends along the first direction.

2. Liquid cooling plate of claim 1, wherein the flow disturbance member comprises a plurality of helical blades, the plurality of helical blades are provided with a plurality of through holes, and the plurality of through holes penetrate the plurality of helical blades in the first direction.

3. Liquid cooling plate of claim 2, wherein the flow disturbance member is provided with the plurality of through holes, and the plurality of through holes are evenly distributed on the helical blades.

4. Liquid cooling plate of claim 2, wherein intervals between adjacent helical blades of the flow disturbance member are equal.

5. Liquid cooling plate of claim 2, wherein the flow channel comprises a liquid inlet opening and a liquid outlet opening, and a distance between adjacent helical blades near the liquid inlet opening is greater than a distance between adjacent helical blades near the liquid outlet opening.

6. Liquid cooling plate of claim 2, wherein the flow channel comprises a liquid inlet opening and a liquid outlet opening, and in a direction from the liquid inlet opening to the liquid outlet opening, intervals between adjacent helical blades of the flow disturbance member sequentially decrease.

7. Liquid cooling plate of any one of claims 1 to 6, wherein a side surface of the flow channel facing the flow disturbance member is provided with a convex structure.

8. Liquid cooling plate of any one of claims 1 to 6, wherein a cross section of the flow channel is circular.

9. Liquid cooling plate of any one of claims 1 to 6, wherein the flow channel penetrates through the liquid cooling plate body, and the plurality of flow channels are arranged in parallel to each other in a second direction perpendicular to the first direction.

10. A liquid cooling system, comprising:
the liquid cooling plate of any one of claims 1-9;
a collector;
a flow channel comprising a liquid inlet end and a liquid outlet end;
the collector comprises a liquid inlet collector and a liquid outlet collector, the liquid inlet collector is communicated with the liquid inlet end, and the liquid outlet collector is communicated with the liquid outlet end;
the liquid cooling plate extends in a first direction, the liquid cooling plate comprises two opposite ends in the first direction, and the liquid inlet end, the liquid outlet end, the liquid inlet collector, and the liquid outlet collector are located at a same end of the liquid cooling plate.

11. Liquid cooling system of claim 10, wherein the liquid inlet end is provided with a liquid inlet opening, and the liquid outlet end is provided with a liquid outlet opening;
the liquid inlet collector comprises a liquid inlet connector, and the liquid outlet collector comprises a liquid outlet connector;
the liquid inlet opening is connected to the liquid inlet connector in a pluggable manner, and the liquid outlet opening is connected to the liquid outlet connector in a pluggable manner.

12. Liquid cooling system of claim 11, wherein the liquid inlet opening, the liquid outlet opening, the liquid inlet connector, and the liquid outlet connector all extend along a second direction perpendicular to the first direction, the liquid inlet opening is butt-jointed to the liquid inlet connector along the second direction, and the liquid outlet opening is butt-jointed to the liquid outlet connector along the second direction.

13. Liquid cooling system of claim 12, wherein the liquid cooling plate further comprises a connecting member, the connecting member is connected to one end of the liquid cooling plate, and the liquid inlet opening and the liquid outlet opening are disposed on two opposite sides of the connecting member; a plurality of channels are provided in the connecting member, and each of the plurality of channels is configured to communicate the liquid inlet opening with the flow channel, and to communicate the liquid outlet opening with the flow channel.

14. Liquid cooling system of any one of claims 10-13, wherein the liquid inlet collector and the liquid outlet collector are integrally formed.

15. Liquid cooling system of claim 14, wherein the liquid cooling system comprises a plurality of liquid cooling plates, the plurality of liquid cooling plates are arranged in parallel, and the plurality of liquid cooling plates are in communication with one collector to form a parallel structure.

16. Liquid cooling system of claim 12, wherein along the second direction, the liquid cooling plate comprises a top end and a bottom end that are opposite to each other, and the collector overlaps the top end or the bottom end.

17. Liquid cooling system of any one of claims 10 to 13, wherein the flow channel is U-shaped, one end of a U-shaped flow channel is the liquid inlet end, and the other end of the U-shaped flow channel is the liquid outlet end.

18. Liquid cooling system of any one of claims 10 to 13, wherein the liquid cooling plate is in a wave shape along the first direction.

19. A battery module, comprising the liquid cooling system of any one of claims 10 to 18.
